Europäisches Patentamt

European Patent Office

Office européen des brevets

(19)

(11) EP 0 825 023 B1

(12) EUROPÄISCHE PATENTSCHRIFT

(45) Veröffentlichungstag und Bekanntmachung des Hinweises auf die Patenterteilung:
**17.05.2000 Patentblatt 2000/20**

(51) Int Cl.[7]: **B41F 33/00**

(21) Anmeldenummer: **97112666.9**

(22) Anmeldetag: **24.07.1997**

(54) **Verfahren zur Ermittlung von Vorgabewerten für die Steuerung einer Druckmaschine**

Method for the determination of set-up data for the control of a printing machine

Procédé pour déterminer des données de reglage pour la commande d'une machine à imprimer

(84) Benannte Vertragsstaaten:
**AT CH DE FR GB IT LI NL**

(30) Priorität: **16.08.1996 DE 19632969**

(43) Veröffentlichungstag der Anmeldung:
**25.02.1998 Patentblatt 1998/09**

(73) Patentinhaber: **MAN Roland Druckmaschinen AG**
**63075 Offenbach (DE)**

(72) Erfinder:
• **Wendt, Karsten, Dr.-Ing.**
**63179 Obertshausen (DE)**

• **Schramm, Peter**
**60594 Frankfurt (DE)**

(74) Vertreter: **Stahl, Dietmar**
**MAN Roland Druckmaschinen AG,**
**Abteilung FTB/S,**
**Postfach 101264**
**63012 Offenbach (DE)**

(56) Entgegenhaltungen:
**EP-A- 0 142 470       DE-A- 3 903 981**
**DE-A- 4 311 132       DE-A- 4 343 905**

EP 0 825 023 B1

**Beschreibung**

Die Erfindung betrifft ein Verfahren zur Bestimmung von Vorgabewerten zur Steuerung bzw. Regelung einer Druckmaschine gemäß dem Oberbegriff von Anspruch 1.

Bei der Herstellung von Druckprodukten ist es bekannt, den Farbauftrag quantitativ an extra mitgedruckten Meßelementen bzw. an Meßstellen im eigentlichen Druckbild zu erfassen. Weit verbreitet ist die sogenannte Farbdichtemessung, bei welcher Meßstellen mit einer oder mehreren Druckfarben mit entsprechenden Filtern zur Bestimmung der Farbschichtdikke ausgemessen werden. Ebenfalls ist es bekannt, Meßstellen (Druckkontrollstreifen bzw. Meßstelle im Bild) farbmetrisch auszumessen, um über die so erhaltenen Ist-Farborte in Verbindung mit vorgegebenen Soll-Farborten nebst entsprechender Farbabstands-(Vektor)Bildung die nötigen Stellgrößen zur Korrektur des Druckprozesses abzuleiten. Ferner sind spektrale Meßverfahren bekannt, bei welchen Remissionen über eine Vielzahl von Stützstellen bzw. kontinuierlich (beispielsweise innerhalb des sichtbaren Spektrums) bestimmt werden. Auch in diesem Falle wird das erfaßte Ist-Spektrum einer Probestelle des Druckproduktes mit einem vorgegebenen Soll-Spektrum, beispielsweise eines Probebogens (Vorlage) verglichen, um daraus die entsprechenden Stellbefehle für die Farbführung abzuleiten. Derartige spektrale Meß- und Regelverfahren werden insbesondere beim Tiefdruck angewandt, da bei diesem Druckverfahren die einer Farbe zuzuführenden Beimengungen zwecks Erreichen einer Soll-Remission in einfacher Weise aus einer erfaßten spektralen Differenz ermittelbar sind.

Aus der DE 4 311 132 A1 ist ein Verfahren zur Farbregelung/Steuerung in einer Druckmaschine bekannt, bei welchen die Dichtespektren von Probedrucken der einzelnen Druckfarben mit vorgegebener Flächendeckung sowie des Papierweiß gespeichert werden und daraufhin die Dichtespektren von mindestens einer Meßstelle pro Farbzone an einer Vorlage und entsprechenden Meßstellen auf dem Druckprodukt bestimmt werden und die gemessenen Dichtespektren von Vorlage und Druckprodukt als Linearkombination der mit den Flächendeckungsgraden gewichteten Dichtespektren der Probedrucke der einzelnen Druckfarben und des Papierweiß dargestellt werden. Anschließend werden die Flächendeckungsgrade so berechnet, daß die Dichtespektren optimal durch die Linearkombination approximiert werden, wobei die Farbzufuhr bei einer Abweichung der Flächendeckungsgrade von Druckprodukt und Vorlage derartig geändert wird, bis eine Angleichung der Dichtespektren erreicht wird. Nachteilig bei diesem vorbekannten Verfahren ist, daß die Faktoren in dem Ansatz der Linearkombination zur Darstellung des gesamten Dichtespektrums (Zusammendruck der Bildstelle) aus den Dichtespektren der Einzelfarben als Flächendekkungsgrade angesetzt werden. Ein derartiger Ansatz hinsichtlich der Faktoren ist bei hohen Flächendeckungsgraden einer Farbe in einer Bildstelle problematisch und scheitert letztlich beim Drucken einer oder mehrerer Farben im Vollton. Dies hat seinen Grund darin, daß, wenn beispielsweise eine Farbe der Vorlage als Volltonfläche gedruckt wird, die entsprechende Farbe im Druckexemplar ebenfalls nur als Vollton und darüber hinaus nicht stärker gedruckt werden kann. Ferner setzt dieses Verfahren voraus, daß bereits eine genau mit den beim späteren Druck verwendeten Druckfarben hergestellte Vorlage existiert, an der dann in den entsprechenden Bildstellen die spektralen Remissionen bestimmt werden (Soll-Spektrum einer Bildstelle).

Aus der DE 4 343 905 C2 ist ein Verfahren zur Bestimmung der nötigen Änderung der Farbführung bei einer Mehrfarben-Druckmaschine, insbesondere Offsetdruckmaschine bekannt, bei welchen die Farbdichtespektren von mindestens einer bunten Bildstelle und zugleich von den am Zusammendruck beteiligten einzelnen Druckfarben hinsichtlich einem Vorlageexemplar sowie jeweils folgenden Druckexemplaren aufgenommen werden, die Farbdichtespektren von Vorlage- und Druckexemplar jeweils als Linearkombination der mit Flächendeckungsgraden gewichteten Farbdichtespektren der Einzelfarben sowie des Papierweiß dargestellt und mittels linearer Regression die Flächendeckungsgrade der Einzelfarben ermittelt und daraus die Ableitung einer Farbzufuhrverstellung zur Angleichung der Farbgebung des Produktexemplares auf diejenige des Vorlageexemplars erfolgt. Aus den Farbdichtespektren korrespondierender Bildstellen des Vorlage- und des Druckexemplares wird das Differenz-Farbdichtespektrum bestimmt, ferner werden die Farbdichtespektren der am Zusammendruck der bunten Bildstelle beteiligten Druckfarben (Buntfarben + Schwarz) an mitgedruckten Kontrollfeldern erfaßt. Sodann wird das Differenz-Farbdichtespektrum zwischen Vorlage- und Druckexemplar als eine Linearkombination der Farbdichtespektren der am Druck des Druckexemplares beteiligten Druckfarben (Buntfarben + Schwarz) dargestellt, wobei die Koeffizienten dieser Linearkombination mit Hilfe einer linearen Regression bestimmt werden. Die aus der Linearkombination bestimmten Koeffizienten geben dann ein Maß an, wie die einzelnen am Druck des Druckexemplares beteiligten Farben (Buntfarben + Schwarz) anteilig verändert werden müssen. Bei diesem vorbekannten Verfahren ist es dabei unerheblich, ob die Vorlage mit den später verwendeten Druckfarben gedruckt worden ist, oder ob die Vorlage gar nach einem ganz anderen Reproduktionsverfahren erzeugt wurde. Dieses Farbsteuerverfahren funktioniert dabei auch mit theoretisch vorgegebenen Soll-Farbdichtespektren.

Den obenstehend vorbekannten Verfahren ist dabei gemeinsam, daß sogenannte Dichte-bzw. Farbdichtespektren insbesondere als Vorgabewerte Verwendung finden. Die sowohl an Vorlage als auch an dem Druckexemplar erfaßten spektralen Remissionen werden durch Logarithmieren in Dichtewerte umgerechnet. Diese Umrechung in Farbdichtewerte hat dabei den Vorteil, daß das Zusammenwirken der lasierenden (also nicht vollständig deckenden) Druckfarben im Übereinanderdruck näherungsweise als Summe der Dichtespektren der einzelnen Druckfarben darstellbar ist.

Die aus der DE 4311 132 A1 als auch das aus der DE 4 343 905 C2 bekannten Verfahren bedingen, daß Soll-Farbdichtespektren an einer Vielzahl von Bildstellen einer Vorlage zu bestimmen sind. Eine Vielzahl der hergestellten Druckprodukte werden als Vorlage auf Bildverarbeitungsrechnern erstellt, wobei es der heutige Stand der Technik zudem erlaubt, die derartig erhaltenen Bilddaten nach entsprechender Farbseparation sowie einem anschließenden Raster-Image-Processing direkt zur Erzeugung der nötigen Druckformen (Druckplatten beim Offsetdruck) weiterzuverarbeiten. Bei einem rein digitalen Workflow zwischen der Erzeugung der Druckvorlage sowie den beim Druck zu verwendenden Druckformen/Druckplatten kann auf die Herstellung von Vorlagen in Form von Probedrukken, Proofs oder dgl. gänzlich verzichtet werden. Dabei sind sogar Soll-Farborte der digitalen Vorlage im streng farbmetrischen Sinne vorgebbar, da durch die Anwendung von Colormanagement-Systemen die Charakteristik der Farbveränderung zwischen den Ausgabegeräten Bildschirm einer Bildverarbeitungsstation / Druckmaschine brücksichtigt werden kann.

Das aus der DE 4 343 905 C2 bekannte Verfahren zur Bestimmung der nötigen Änderung der Farbführung bei einer Mehrfarben-Druckmaschine weist dabei entscheidende Vorteile hinsichtlich Konvergenz der an die Soll-Farbdichtespektren heranzuführenden Ist-Farbdichtespektren der Druckexemplare auf. Dieses Verfahren setzt jedoch vorbekannte Soll-Farbdichtespektren voraus und findet keinerlei Integration in den derzeit bekannten Colormanagement-Systemen, da Farborte (Soll-Farbort, Ist-Farbort) bei diesem Verfahren keine Verwendung finden.

Aus der EP 0 142 470 B1 ist ein Verfahren und eine Vorrichtung zur Beurteilung der Druckqualität eines vorzugsweise auf einer Offset-Druckmaschine hergestellten Druckerzeugnisses bekannt, bei welchem zur Beurteilung der Druckqualität das Druckerzeugnis sowie eine Vorlage jeweils in Bildelemente eingeteilt und bildelementweise photoelektrisch ausgemessen werden. Die Remissions-Soll- und Istwerte jeder einzelnen Druckfarben werden dabei densitometrisch aufgenommen, ferner findet ein die Relation zwischen empfindungsmetrischer und meßtechnischer Farbabweichung bei entsprechenden Remissionswerten angebender Empfindungsgewichtfaktor Verwendung. Dieses Verfahren bietet jedoch keine Möglich Soll-Farbdichtespektren aus einer insbesondere digital vorliegenden Druckvorlage abzuleiten, welche dann insbesondere in einem aus der DE 4 343 905 C2 bekannten Verfahren zur Herstellung von Druckprodukten verwendbar sind.

Aus der EP 0 142 469 B1 ist ebenfalls ein Verfahren zur Regelung der Farbfiihrung bei einer Offsetdruckmaschine bekannt, bei welcher zumindest während der Anlaufphase der Druckmaschine zur Regelung des Andruckes die einzelnen Druckfarben einer Referenz in Form der jeweiligen Druckplatte oder der ihr zugrundeliegenden fotografischen Vorlage in eine Vielzahl von Bildelementen eingeteilt und für jedes Bildelement die Flächendeckung bestimmt wird. Daraus werden Remissions-Sollwerte gebildet, welche mit an den Druckelementen bildelementeweise gewonnenen Remissions-Werten verglichen und zur Herleitung von Stellbefehlen für die Farbführung herangezogen werden. Wie im Fall des aus der EP 0 142 470 B1 bekannten Verfahrens liefert auch diese Vorgehensweise keine Soll-Farbdichtespektren, welche dann zur Steuerung der Farbführung heranzuziehen wären.

Aufgabe der vorliegenden Erfindung ist es daher, ein Verfahren gemäß dem Oberbegriff von Anspruch 1 derartig weiterzubilden, so daß unter Vermeidung der voranstehend genannten Nachteile eine Bestimmung von Soll-Spektren bzw. Soll-Farbdichtespektren von Bildstellen einer insbesondere digitalen Vorlage möglich ist.

Gelöst wird diese Aufgabe durch die kennzeichnenden Merkmale von Anspruch 1. Weiterbildungen der Erfindung ergeben sich aus den Unteransprüchen.

Nach der Erfindung ist vorgesehen, daß in einer digital erzeugten Bildvorlage eine Festlegung der entsprechenden Meßfelder erfolgt, dahingehend, daß anhand dieser Meßfelder auch der spätere Druck bei der Herstellung der einzelnen Druckprodukte gesteuert bzw. geregelt wird. Bei der Steuerung bzw. Regelung des Druckes findet dabei vorzugsweise ein Verfahren Verwendung, welches wie voranstehend erläutert die Differenz zwischen Soll-und Ist-Dichtespektrum ermittelt und das sogenannte Differenz-Farbdichtespektrum als eine Linearkombination der beim Druck verwendeten Druckfarben (Buntfarben + Schwarz + Sonderfarben) darstellt. Mittels der aus der digitalen Bildvorlage ableitbaren Flächendekkungen der einzelnen Farben, der Spektren der beim Druck zu verwendenden Farben sowie den Bildstellen zuordenbaren Soll-Farborten werden sodann Soll-Spektren bzw. Soll-Farbdichtespektren unter Zugrundelegung eines den Zusammendruck simulierenden Modells ermittelt.

Zur Bestimmung des Soll-Farbdichtespektrums geht es also darum, zunächst für ein Meßfeld der digitalen Vorlage ein Soll-Spektrum zu ermitteln, welches dann ggf. nach entsprechender Logarithmierung in ein Soll-Farbdichtespektrum zur Steuerung/ Regelung gemäß dem voranstehend genannten Verfahren verwendbar ist.

Des weiteren erfolgt die Erläuterung eines Ausführungsbeispiels der Erfindung anhand der Zeichnungen. Hierbei zeigt:

Fig. 1     Die Anordnung mehrerer Meßfelder im Sujet einer zu druckenden Vorlage,

Fig. 2      die Aufteilung eines Meßfeldes in Bildelemente, und

Fig. 3     die Ermittlung eines Soll-Farbdichtespektrums für ein Meßfeld .

Im Ausführungsbeispiel wird der Begriff Meßfeld verwendet, wobei es sich hier sowohl in der Vorlage als auch in den später herzustellenden Druckexemplaren um ein oder mehrere Bildelemente umfassende Bereiche definierter Größe (z.B. 5 x 5 mm$^2$) handelt, an welchen dann Ist-Remissionen im Sinne von spekralen Ist-Werten erfassbar sind. Der Begriff Spektrum bedeutet dabei, daß sowohl meßtechnisch als auch rechnerisch mehrere Remissionswerte im sichtbaren spektralen Bereich vorzugsweise auch im nahen Infrarot erfasst bzw. berücksichtigt werden. Dies kann in einfacher Weise durch Verwendung eines Gitterspektrometers erfolgen. Alternativ dazu kann auch mit mehreren diskreten Spektralwerten mit anschließender Interpolation gearbeitet werden. Des weiteren sei darauf hingewiesen, daß sich das erfindungsgemäße Verfahren sowohl unter Verwendung der Spektren als auch der Farbdichtespektren der einzelnen Druckfarben sowie des entsprechenden Zusammendruckes der einzelnen Druckfarben innerhalb der Meßfelder (Bereiche) anwenden läßt. Bei der Berechnung eines Soll-Spektrums bei gegebenem Soll-Farbort, gegebenen Flächenbedeckungen der Einzelfarben sowie deren Spektren (Spektren der Einzelfarben) ergibt sich das Gesamtspektrum des Zusammendruckes entsprechend als Multiplikation der gewichteten (skalierten) Einzelspektren der entsprechend ihrem Flächendeckungsanteil am Zusammendruck beteiligten Einzelfarben.

Bei Berechnung eines Soll-Farbdichtespektrums kann dabei genauso vorgegangen werden, d.h. es wird zunächst das Soll-Spektrum bei gegebenem Soll-Farbort, gegebenen Flächenbedeckungen der Einzelfarben sowie deren Spektren berechnet, wobei dann das zwecks größtmöglicher Annäherung an den Soll-Farbort das errechnete Soll-Spektrum durch Logarithmieren in ein Soll-Farbdichtespektrum umgewandelt wird.

Alternativ dazu kann das Soll-Farbdichtespektrum bei gegebenem Soll-Farbort einer Meßstelle auch durch eine Summation der entsprechend der Anteile druckender Fläche gewichteten Farbdichtespektren der Einzelfarben berechnet werden. Diese hier zuletzt angedeutete Vorgehensweise wird dabei im Ausführungsbeispiel näher erläutert.

Auf einer nicht dargestellten Datenverarbeitungsanlage wurde eine Druckvorlage V erstellt, wobei in der Datenverarbeitungsanlage sämtliche Bilddaten dieser Vorlage V in einem entsprechenden Speichermedium abgelegt sind. Es wird in diesem Erläuterungsbeispiel davon ausgegangen, daß es sich bei dem Bild der Vorlage V um ein später vierfarbig zu druckendes Sujet handelt. Die Vorlage V soll mit den drei Grundfarben (Yellow, Magenta, Cyan) sowie der zusätzlichen Druckfarbe Schwarz vervielfältigt werden.

In der insbesondere auf dem Monitor der Bilddatenverarbeitungsanlage darstellbaren Vorlage V wird entsprechend dem Bildaufbau/der Bildverteilung (Sujet) eine Anzahl von Meßfeldern $M_a$, $M_b$, $M_c$.. festgelegt. Die Verteilung der Meßfelder $M_a$, $M_b$ usw. bezieht sich dabei auf bildwichtige Stellen im Sujet, welche insbesondere für das Erscheinungsbild wesentliche Farbpartien oder dgl.aufweisen. Dabei kann jeder Grobraster-Bildpunkt ein Meßpunkt (für die spätere Druckkontrolle) sein.

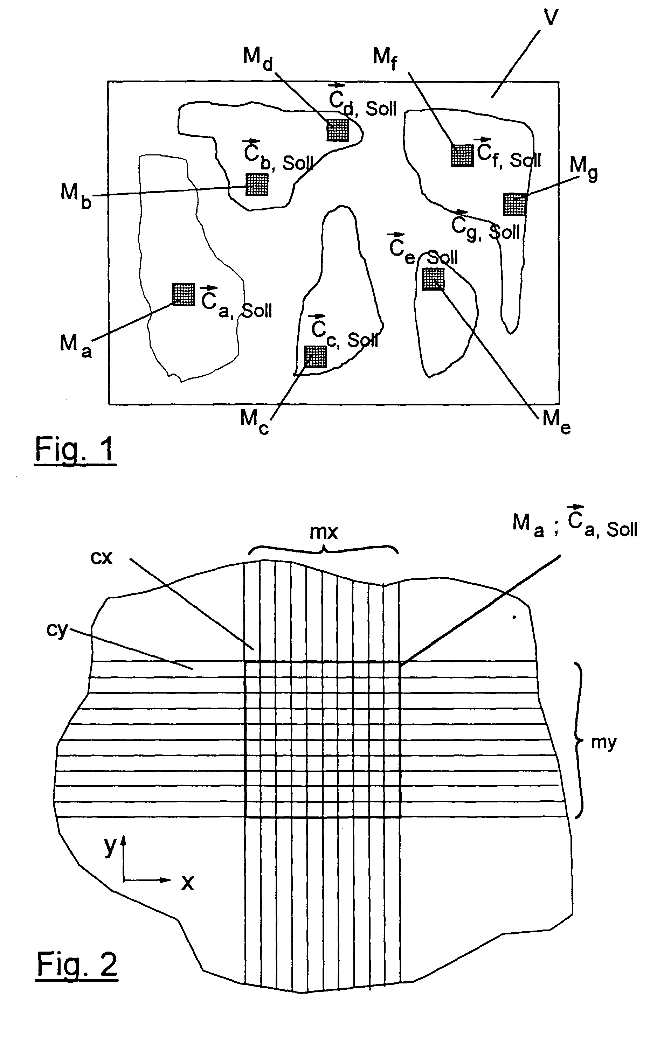

Des weiteren erfolgt die Erläuterung des erfindungsgemäßen Verfahrens anhand des in Fig. 1 dargestellten Meßfeldes $M_a$. Für dieses auf der digital hergestellten Vorlage V festgelegte Meßfeld $M_a$ wird insbesondere unter Anwendung eines Colormanagement-Systems ein in der späteren Produktion (Druck) zur erzielender Soll-Farbort $C_{a,\,Soll}$ zugeordnet. Den übrigen Meßfeldern $M_b$, $M_c$, welche entsprechend dem Sujetaufbau über die gesamte Vorlage V verteilt sind, werden in entsprechender Weise Soll-Farborte $C_{b,\,Soll}$ $C_{c,\,Soll}$ usw. zugeordnet.

Aus der digital auf einer Bildverarbeitungsanlage errichteten Vorlage V werden nun nach einer Farbseparation entsprechend der beim Druck zu verwendenden Farben sowie entsprechender Rasterung (RIP) die Daten erzeugt, welche beispielsweise für eine direkte Druckplattenerzeugung mittels einem Platesetter nötig sind. Am Ende des hier angedeuteten und an sich bekannten Weiterverarbeitungsprozesses stehen die für die Herstellung des farbigen Drukkes nötigen Druckformen/Druckplatten zur Verfügung. Zusätzlich zu dieser Bildverarbeitung (Farbseperation/Rasterung) werden unter Zugrundelegung eines gröberen Rasters die einzelnen Flächendeckungsgrade der einzelnen Druckfarben in den entsprechenden Farbauszügen bspw. für eine Farbzonenvoreinstellung ermittelt. Für das Meßfeld $M_a$ bzw. für sämtliche Bildelemente des Meßfeldes $M_a$ stehen somit die jeweiligen Flächendeckungsgrade $A_{a,\,Cyan}$; $A_{a,\,Magenta}$; $A_{a,\,Yellow}$ und $A_{a,\,Black}$ und die zugehörigen Soll-Farborte $C_{a,\,soll}$, $C_{b,\,soll}$ ... zur Verfügung. Diese Flächenbedeckungsbestimmung kann dabei hier nicht nur anhand von sogenannten Grobrasterbilddaten (z.B. CIP3 Daten) erfolgen, sondern selbstverständlich auch aus den Daten einer nach der Plattenherstellung durchgeführten Druckplattenabtastung erzeugt werden.

Fig. 2 zeigt das Meßfeld M, der Vorlage V gemäß Fig. 1 in Vergrößerung. Die Achsen x, y geben die Richtungen einer Einteilung der Rasterung bzw. der Bilddaten der Vorlage V wieder. Die Skalierung cx, cy innerhalb des Meßfeldes $M_a$ stellt eine Aufteilung des Meßfeldes $M_a$ in eine Anzahl entsprechend großer Flächenelemente dar, wobei diese Skalierung der Auflösung der Vorlage V entsprechend der Datengröße, der Rasterung des späteren Drukkes oder einem eine Vielzahl von Bildpunkten (Pixel) umfassenden Grobraster, bspw. im CIP3-Format, entspricht. Im vorliegenden Ausführungsbeispiel entspricht die Skalierung cx, cy ohne Beschränkung der Allgemeinheit einer Grobrasterung im Sinne des CIP-3-Formates (Grobrasterung des Meßfeldes $M_a$), so daß sich eine entsprechende Reduktion der gemäß nachfolgender Beschreibung durchzuführenden Bilddaten ergibt. Gemäß den voranstehend gemachten Ausführungen sind innerhalb des Meßfeldes $M_a$ die Flächenbedeckungsgrade sämtlicher Grobraster-Bildelemente der Kantenlänge cx•cy für die einzelnen Druckfarben Cyan, Magenta, Yellow, Black bekannt.

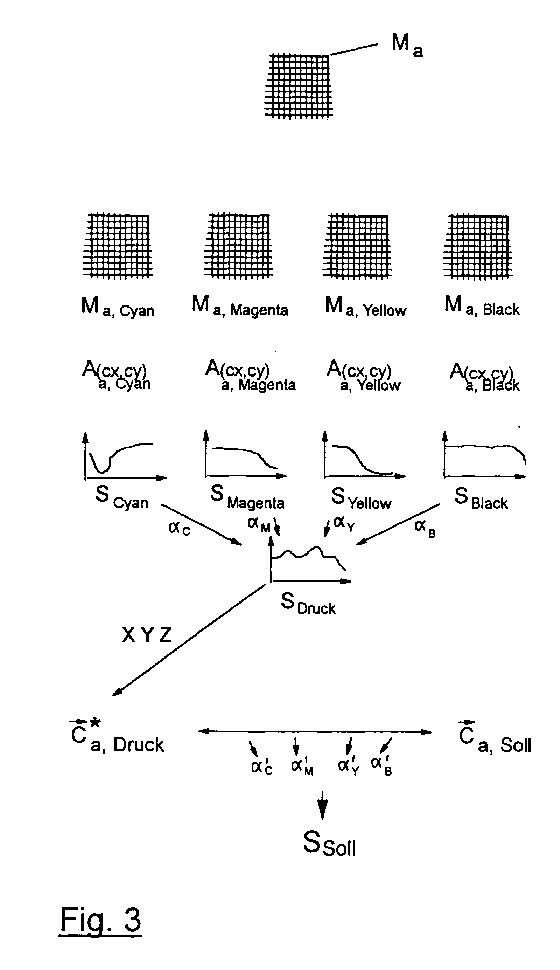

Bei der weiteren Erläuterung des erfindungsgemäßen Verfahrens zur Bestimmung von Soll-Farbdichte-Spektren für das hier beispielsweise herausgegriffene Meßfeld $M_a$ wird davon ausgegangen, daß die Farbdichtespektren $S_{Cyan}$, $S_{Magenta}$, $S_{Yellow}$, $S_{Black}$ der beim späteren Druck verwendeten Druckfarben gespeichert vorliegen. Für jede einzelne Druckfarbe ist somit für jedes Grobraster-Bildelement innerhalb der den Farbauszügen zuordenbaren Meßfeldern $M_{a, Cyan}$; $M_{a, Magenta}$; $M_{a, Yellow}$; $M_{a, Black}$ des Meßfeldes $M_a$ die Flächendeckung $A_{a, Cyan}(cx,cy)$; $A_{a, Magenta}(cx,cy)$; $A_{a, Yellow}(cx,cy)$; $A_{a, Black}(cx,cy)$ bekannt. Den hier angesprochene Sachverhalt verdeutlicht hierbei Fig. 3.

Dem Meßfeld $M_a$ der Vorlage V ist ein im Druck zu erreichender Soll-Farbort $C_{a,Soll}$ zugewiesen. Nun wird durch Summation über sämtliche Bildelemente mit den Koordinaten cx, cy innerhalb des Meßfeldes $M_a$ entsprechend den Flächendeckungen $A_{a, Cyan}(cx,cy)$; $A_{a, Magenta}(cx,cy)$; $A_{a, Yellow}(cx,cy)$; $A_{a, Black}(cx,cy)$ der einzelnen Farben (Meßfelder der Farbauszüge $M_{a, Cyan}$; $M_{a, Magenta}$; $M_{a, Yellow}$; $M_{a, Black}$) in Verbindung mit den gespeicherten Farbdichtespektren $S_{Cyan}$, $S_{Magenta}$, $S_{Yellow}$, $S_{black}$ das resultierende Farbdichtespektrum des Zusammendruckes ermittelt. Für ein Bildelement an der Stelle cx, cy stellt sich dabei das resultierende Farbdichtespektrum $S_{a, Druck}(cx, cy)$ des Zusammendruckes (Vierfarbdruck) wie folgt dar:

$$S_{a, Druck}(cx, cy) = A_{a, Cyan}(cx,cy) \cdot S_{Cyan} + A_{a, Magenta}(cx,cy) \cdot S_{Magenta}$$

$$+ A_{a, Yellow}(cx,cy) \cdot S_{Yellow} + A_{a, Black}(cx,cy) \cdot S_{Black}$$

Bei diesem vereinfachtem Ansatz druckt jede Farbe mit der Stärke 1", d.h. die einzelnen Spektren sind ungewichtet.

Führt man Skalierungsfaktoren $\alpha_{a, Cyan}$; $\alpha_{a, Magenta}$; $\alpha_{a, Yellow}$; $\alpha_{a, Black}$ ein, so kann durch diese Faktoren (allgemein $\alpha_i$, mit i = Cyan, Magenta, Yellow, Black sowie weitere Farben) der Anteil der Einzelfarben am Farbdichtespektrum des Zusammendruckes $S_{a, Druck}(cx, cy; \alpha_i)$ variiert werden. Weiterhin wird somit folgende Größe verwendet:

$$S_{a, Druck}(cx, cy; \alpha_i) = \alpha_{a, Cyan} \cdot A_{a, Cyan}(cx,cy) \cdot S_{Cyan} + \alpha_{a, Magenta} \cdot A_{a, Magenta}(cx,cy) \cdot S_{Magenta}$$

$$+ \alpha_{a, Yellow} \cdot A_{a, Yellow}(cx,cy) \cdot S_{Yellow} + \alpha_{a, Black} \cdot A_{a, Black}(cx,cy) \cdot S_{Black}$$

Dieses Farbdichtespektrum des Zusammendruckes $S_{a, Druck}(cx, cy; \alpha_i)$ für ein Bildelement cx,cy kann nun unter Anwendung der bekannten farbmetrischen Bewertungskurven (X,Y,Z) des CIE-Normalbeobachters zu einem Farbort $C_a(cx, cy; \alpha_i)$ des Zusammendruckes umgerechnet werden.

Schließlich sind die Skalierungsfaktoren $\alpha_i$ (i = Cyan, Magenta, Yellow, Black) durch Variation derartig zu optimieren, so daß der gemäß dem oben dargestellten Modellansatz errechnete Gesamt-Farbort $C^*_a(\alpha_i)$ bis auf einen vorgegebenen Toleranz-Farbabstand gleich dem des Meßfeldes $M_a$ zugeordneten Soll-Farbortes $C_{a, Soll}$ ist. Dieser Variationsansatz läuft darauf hinaus, daß folgende Größe:

$$\Sigma_i (1-\alpha_i)^2$$

minimal ist, wobei sich diese Summation über alle i (i = Cyan, Magenta, Yellow, Black), d.h. über sämtliche den Einzelfarben zugeordnete Skalierungsfaktoren erfolgt.

Die das obige Kriterium erfüllenden Skalierungsfaktoren $\alpha'_i$ können nun in die weiter oben stehende Formel eingesetzt werden, so daß:

$$S_{a, Druck}(cx, cy)_{Soll} = \alpha'_{a, Cyan} \cdot A_{a, Cyan}(cx,cy) \cdot S_{Cyan} + \alpha'_{a, Magenta} \cdot A_{a, Magenta}(cx,cy) \cdot S_{Magenta}$$

$$+ \alpha'_{a, Yellow} \cdot A_{a, Yellow}(cx,cy) \cdot S_{Yellow} + \alpha'_{a, Black} \cdot A_{a, Black}(cx,cy) \cdot S_{Black}$$

Eine gewichtete Summation über sämtliche $S_{a, Druck}(cx, cy)_{Soll}$ der Bildelemente cx, cy innerhalb des Meßfeldes $M_a$ ergibt schließlich das Soll-Farbdichtespektrum $S_{a, Druck, Soll}$ des Meßfeldes $M_a$, welches bei der Herstellung der Druckexemplare als Vorgabewert zu grunde gelegt wird.

Bezugszeichenliste

| | |
|---|---|
| V | Vorlage |
| $M_a$, $M_b$, ... | Meßfelder |
| $M_{a,\,Cyan}$; $M_{a,\,Magenta}$ ··· | Farbauszüge des Meßfeldes $M_a$ |
| $A_{a,\,Cyan}$; $A_{a,\,Magenta}$ ··· | Flächendeckungen der Einzelfarben im Meßfeld $M_a$ |
| $C_{a,\,Soll}$; $C_{b,\,Soll}$, ··· | Soll-Farborte für Meßfelder $M_a$, $M_b$.. |
| cx, cy | Bildpunkt bzw. Punktraster der Vorlage V |
| mx, my | Bereich der Bildpunkte cx, cy innerhalb des Meßfeldes $M_a$, |

**Patentansprüche**

1. Verfahren zur Ermittlung von Vorgabewerten für die Herstellung von mehrfarbigen Druckexemplaren auf einer Druckmaschine, insbesondere auf einer autotypisch arbeitenden Druckmaschine, wobei bei einer Vorlage in wenigstens einem Bildelement mit gegebenen Anteilen druckender Fläche der beim Druck zu verwendenden einzelnen Farben ein spektraler Remissions-Sollwert zugeordnet wird und dieser wenigstens eine spektrale Remissions-Sollwert beim anschließendenDruck in Verbindung mit einem spektralen Remissions-Istwert für die Herstellung von Stellbefehlen für die Farbführung herangezogen wird, unter Darstellung der spektralen Remission (S) von mehrfarbigen Bildelementen (cx, cy; mx, my) als Koeffizienten beinhaltende Linearkombination aus den Anteilen druckender Fläche ($A_{Farbe}$) sowie den Spektren ($S_{Farbe}$) der einzelnen Farben, dadurch gekennzeichnet,

   dass für jedes Bildelement (cx, cy; mx, my) der Vorlage (Soll) ein im späteren Druck zu erzielender Soll-Farbort ($C_{Soll}$) vorgegeben wird, dass für jedes Bildelement (cx, cy; mx, my) die Bestimmung des Soll-Farbspektrums bzw. des Soll-Farbdichtespektrums ($S_{Soll}$) unter Verwendung einer den Zusammendruck der Einzelfarben entsprechend deren Anteil druckender Fläche ($A_{Farbe}$) innerhalb des oder der Bildelemente (cx, cy; mx, my) wiedergebenden Linearkombination in Verbindung mit den Spektren bzw. Farbdichtespektren ($S_{Farbe}$) der Einzelfarben erfolgt, dass die Spektren bzw. Farbdichtespektren ($S_{Farbe}$) der Einzelfarben innerhalb des den Zusammendruck der Einzelfarben entsprechend deren Anteil druckender Fläche ($A_{Farbe}$) innerhalb des oder der Bildelemente (cx, cy; mx, my) wiedergebenden Linearkombination jeweils mit einem Skalierungfaktor ($\alpha_i$) versehen werden, und dass die Koeffizienten ($\alpha_i'$) der Linearkombination durch Variation der Skalierungsfaktoren derartig bestimmt werden, so dass der aus den spektralen Remissionswerten (S) gemäß dieser Linearkombination sich ergebende Farbort bestmöglich dem vorgegebenen Soll-Farbort ($C_{Soll}$) entspricht, woraufhin die diesem Farbort entsprechenden spektralen Remissionswerte als Remissions-Sollwert ($S_{Soll}$) verwendet werden.

2. Verfahren nach Anspruch 1, dadurch gekennzeichnet, dass die spektralen Remissions-Sollwerte ($S_{Soll}$) durch Logarithmieren in ein der weiteren Verarbeitung zu Grunde gelegtes Soll-Farbdichtespektrum umgerechnet werden.

3. Verfahren nach Anspruch 1, dadurch gekennzeichnet, dass die spektralen Remissionswerte der einzelnen Farben durch Logarithmieren in Farbdichtespektren umgerechnet werden und das Soll-Farbspektrum aus den Farbdichtespektren der einzelnen Farben bestimmt wird.

4. Verfahren nach einem der Ansprüche 1 bis 3, dadurch gekennzeichnet, dass als Bildelement (cx, cy; mx, my) jeweils ein Bildpunkt (cx, cy) einer digital erzeugten Vorlage (V) verwendet wird.

5. Verfahren nach einem der vorhergehenden Ansprüche, dadurch gekennzeichnet, dass als Bildelement (cx, cy) ein jeweils mehrere Bildpunkte (mx, my) umfassendes Flächenelement eines Grobrasters einer digital erzeugten Vorlage (V) verwendet wird.

**6.** Verfahren nach einem der vorhergehenden Ansprüche,
dadurch gekennzeichnet,
dass die Anteile druckender Fläche ($A_{Farbe}$) der einzelnen Farben in den Bildelementen aus den Daten einer digital erstellten Vorlage nach entsprechender Farbseparation bestimmt werden.

**Claims**

**1.** Process for determining preset values for the manufacture of multi-colour printed examples on a printing press, particularly on a printing press working by autotype, wherein with a master in at least one image element with given proportions of areas to be printed, the individual inks to be used on printing are coordinated to a spectral reflection desired value and to this at least one spectral desired reflection value on the subsequent print is brought into use in combination with a spectral reflection actual value for the manufacture of positioning commands for the ink feed, using representation of the spectral reflection (S) of multi-colour image elements (cx, cy; mx, my) as coefficient containing linear combination from the proportions of surface to be printed ($A_{ink}$) as well as the spectra ($S_{ink}$) of the individual inks,
characterised in that for each image element (cx, cy; mx, my) of the master (desired), a desired colour position ($C_{des}$) to be achieved in the later print is prescribed, that for each image element (cx, cy; mx, my), the determination of the desired ink spectrum or of the desired ink density spectrum ($S_{des}$) takes place using a linear combination representing the co-printing of the individual inks corresponding to their proportion of surface to be printed ($A_{ink}$) within the image element(s) (cx, cy; mx, my) in combination with the spectra or ink density spectra ($S_{ink}$) of the individual inks, that the spectra or ink density spectra ($S_{ink}$) of the individual inks within the surface to be printed are provided with a scaling factor ($x_i$) in each case within the linear combination corresponding to their proportion of printed surface ($A_{ink}$) within the image element(s) (cx, cy; mx, my) and that the coefficients ($\alpha_i'$) of the linear combination are determined by variation of the scaling factors in such a fashion so that the colour position emerging from the spectral reflection values (S) in accordance with this linear combination corresponds as well as possible to the preset desired colour position ($C_{des}$), whereafter the spectral reflection values corresponding to this colour position are used as reflection desired values ($S_{des}$).

**2.** Process according to Claim 1, characterised in that the spectral reflection desired values ($S_{des}$) are converted by taking logarithms into a desired colour density spectrum underlying the further processing.

**3.** Process according to Claim 1, characterised in that the spectral reflection values of the individual inks are converted by taking logarithms into ink density spectra and the desired ink spectrum is determined from the density spectra of the individual inks.

**4.** Process according to one of Claims 1 to 3, characterised in that as image element (cx, cy; mx, my), in each case an image point (cx, cy) of a digitally generated master (V) is used.

**5.** Process according to one of the preceding Claims, characterised in that as image element (cx, cy), a surface element comprising in each case several image points (mx, my) of a coarse raster of a digitally generated master (V) is used.

**6.** Process according to one of the preceding Claims, characterised in that the proportion of surface to be printed ($A_{ink}$) of the individual inks is determined in the image elements from the data of a digitally produced master following corresponding colour separation.

**Revendications**

**1.** Procédé pour déterminer des valeurs de réglage pour la réalisation d'imprimés polychromes sur une machine d'impression, en particulier sur une machine d'impression travaillant de façon autotypique, où dans le cas d'un dessin dans au moins un élément d'image avec des portions données de surface imprimante, une valeur de consigne de réflexion spectrale est associée aux encres ou couleurs individuelles devant être utilisées pour l'impression, et cette valeur de consigne de réflexion spectrale, lors de l'impression suivante, est utilisée, en liaison avec une valeur réelle de réflexion spectrale, pour fournir des ordres de réglage pour l'amenée d'encre, en représentant la réflexion spectrale (S) de plusieurs éléments d'image polychromes (cx,cy ; mx,my) comme combinaison linéaire contenant des coefficients à partir des portions de surface imprimante ($A_{Farbe}$) ainsi que des spectres ($S_{Farbe}$) des couleurs individuelles,
caractérisé en ce que, pour chaque élément d'image (cx,cy ; mx,my) du dessin (Soll), un lieu d'encrage de consigne ($C_{Soll}$) devant être atteint dans l'impression ultérieure est prédéfini, en ce que, pour chaque élément d'image (cx, cy ; mx,my), la détermination du spectre de couleur de consigne ou du spectre de densité optique de consigne ($F_{Soll}$) est effectuée en utilisant une combinaison linéaire reproduisant l'impression commune des couleurs individuelles de façon correspondant à leur portion de surface imprimante ($A_{Farbe}$) à l'intérieur du ou des éléments d'image (cx,cy; mx,my) en liaison avec les spectres ou les spectres de densité optique ($S_{Farbe}$) des couleurs individuelles, en ce que les spectres ou les spectres de densité optique ($S_{Farbe}$) des couleurs individuelles à l'intérieur de la combinaison linéaire reproduisant l'impression commune des couleurs individuelles de façon correspondant à leur portion de surface imprimante ($A_{Farbe}$) à l'intérieur du ou des éléments d'image (cx,cy ; mx,my) sont munis, à chaque fois, d'un facteur d'échelle ($\alpha_i$), et en ce que les coefficients ($\alpha_i$) de la combinaison linéaire sont déterminés par variation des facteurs d'échelle de sorte que l'endroit d'encrage résultant des valeurs de réflexion spectrale (S) selon cette combinaison linéaire correspond le mieux possible à l'endroit d'encrage de consigne prédéfini ($C_{Soll}$), les valeurs de réflexion spectrale correspondant à cet endroit d'encrage étant utilisées comme valeur de consigne de réflexion spectrale ($S_{Soll}$).

2. Procédé selon la revendication 1,
caractérisé en ce que les valeurs de consigne de réflexion spectrale ($S_{Soll}$) sont converties par calcul logarithmique en un spectre de densité optique de consigne à la base du traitement ultérieur.

3. Procédé selon la revendication 1,
caractérisé en ce que les valeurs de réflexion spectrale des couleurs individuelles sont converties par calcul logarithmique en spectres de densité optique et le spectre de couleur de consigne est déterminé à partir des spectres de densité optique des couleurs individuelles.

4. Procédé selon une des revendications 1 à 3,
caractérisé en ce que, comme élément d'image (cx,cy ; mx,my), il est utilisé, à chaque fois, un point image (cx, cy) d'un dessin (V) créé de façon numérique.

5. Procédé selon une des revendications précédentes,
caractérisé en ce que, comme élément d'image (cx,cy), il est utilisé un élément de surface d'une trame grossière d'un dessin (V) créé de façon numérique, comportant à chaque fois plusieurs points images (mx,my).

6. Procédé selon une des revendications précédentes,
caractérisé en ce que les portions de surface imprimante ($A_{Farbe}$) des couleurs individuelles sont déterminées dans les éléments d'image à partir des données d'un dessin créé de façon numérique après séparation correspondante des couleurs.

Fig. 1

Fig. 2

Fig. 3